Europäisches Patentamt

European Patent Office

Office européen des brevets

(19)

(11) Publication number: **0 114 680**
A1

## EUROPEAN PATENT APPLICATION

(12)

(21) Application number: **84100571.3**

(22) Date of filing: **19.01.84**

(51) Int. Cl.³: **B 60 G 17/04**

(30) Priority: **24.01.83 JP 9671/83**

(43) Date of publication of application:
**01.08.84 Bulletin 84/31**

(84) Designated Contracting States:
**DE FR GB**

(71) Applicant: **NISSAN MOTOR COMPANY, LIMITED**
**No.2, Takara-cho, Kanagawa-ku**
**Yokohama-shi Kanagawa-ken 221(JP)**

(72) Inventor: **Iijima, Yoshitaka**
**Atsugisorida Heights 1224 1158, Tsumada**
**Atsugi-shi Kanagawa-ken(JP)**

(74) Representative: **Patentanwälte TER MEER - MÜLLER -**
**STEINMEISTER**
**Triftstrasse 4**
**D-8000 München 22(DE)**

(54) **Automotive vehicle suspension with a vehicle level regulator.**

(57) An automotive vehicle suspension with a vehicle level regulator incorporates a pneumatic-to-hydraulic pressure converter (50) between a pneumatic leveling controller (54) and a hydraulic shock absorber (20). The converter consists of a rigid housing fixed to a convenient location next to the shock absorber and a rolling diaphragm dividing the housing in a pneumatic chamber and a hydraulic chamber. Control pressure from the pneumatic controller (54) acts on the diagram to adjust the hydraulic pressure in the hydraulic chamber which communicates with the working fluid of the shock absorber. The resulting pressure change in the shock absorber causes corresponding movement of a piston which determines the actual vertical spacing between a vehicle body and wheel.

FIG.1

AUTOMOTIVE VEHICLE SUSPENSION WITH

A VEHICLE LEVEL REGULATOR

The present invention relates generally to a suspension system for an automotive vehicle provided therewith a device for regulating or maintaining a vehicle level at a constant level. More specifically, the invention relates to a vehicle suspension with a vehicle level regulator device which allows the length of a suspension assembly to be significantly reduced.

Vehicle level regulators which serve to hold the vehicle at a constant level generally co-operate with a vehicle suspension system including a suspension assembly and respond to vertical displacement of a vehicle body relative to a road surface or a wheel axle. One typical suspension assembly cooperating with a vehicle level regulator device has been disclosed in the Published British Patent Application 2084692.

In summary of the structure of the suspension system of the foregoing Published British Patent Application 2084692, the suspension system has a strut assembly associated with a rolling diaphragm defining a pneumatic chamber. Pneumatic pressure for adjusting the vehicle level is introduced into and discharged from the pneumatic chamber. In such a conventional structure, a the lower suspension coil spring seat is apt to impinge upon

- 2 -

0114680

the rolling diaphragm and damage the latter. In order to prevent this, the displacement stroke of the rolling diaphragm and the variation range of volume of pneumatic chamber must be adequately large. Therefore, the required vertical dimension for such a strut assembly is excessively long to permit lowering of a front fender.

Therefore, it is an object of the present invention to provide an automotive vehicle suspension with a vehicle level regulator which allows the vertical dimensions therefor required for installation to be reduced.

Another object of the present invention is to provide a vehicle level regulator associated with a hydraulic shock absorber, which can adjust the pressure of a working fluid in the shock absorber to regulate the vehicle level.

To accomplish the foregoing and other objects and advantages, the vehicle suspension with the vehicle level regulator according to the present invention is provided with a converter means associated with a shock absorber of a suspension assembly. The converter means is, in turn, associated with a pneumatic pressure controller responsive to variation of the vehicle level to vary the pneumatic pressure applied to the converter means. The pneumatic pressure fed from the controller is converted into a fluid pressure by the converter means. The converted fluid

pressure is applied to the shock absorber to adjust the vehicle level to a constant level.

According to the present invention, there is provided an automotive vehicle suspension with a vehicle level regulator, which comprises a suspension assembly including a shock absorber disposed between a vehicle body and a vehicle wheel, the shock absorber having a piston reciprocally disposed within a shock absorber cylinder to define therein first and second fluid chambers communicating with each other via the piston, which first and second fluid chambers are filled with a working fluid, the relative pressures of working fluid in the first and second fluid chambers determining the movement of the piston, the position of the piston within the shock absorber determining the relative distance between the vehicle body and the vehicle wheel, a pressure control means associated with the shock absorber for adjusting the pressure of the working fluid by way of converting pneumatic pressure into fluid pressure, and a pneumatic pressure supply responsive to relative displacement between the vehicle body and the vehicle wheel beyond a predetermined value to supply a pneumatic pressure to the pressure control means in order to hold the relative distance between the vehicle body and the vehicle wheel within a given range.

The present invention will be understood from the

- 4 -

0114680

detailed description given herebelow and from the accompanying drawings of the preferred embodiment of the present invention, which, however, should not be taken to limit the invention but are for explanation only.

In the drawings:

Fig. 1 is a schematic front elevation of the preferred embodiment of an automotive vehicle suspension with a vehicle level regulator according to the present invention; and

Fig. 2 is an enlarged cross-sectional view of a major part of the suspension in combination with the vehicle level regulator of Fig. 1.

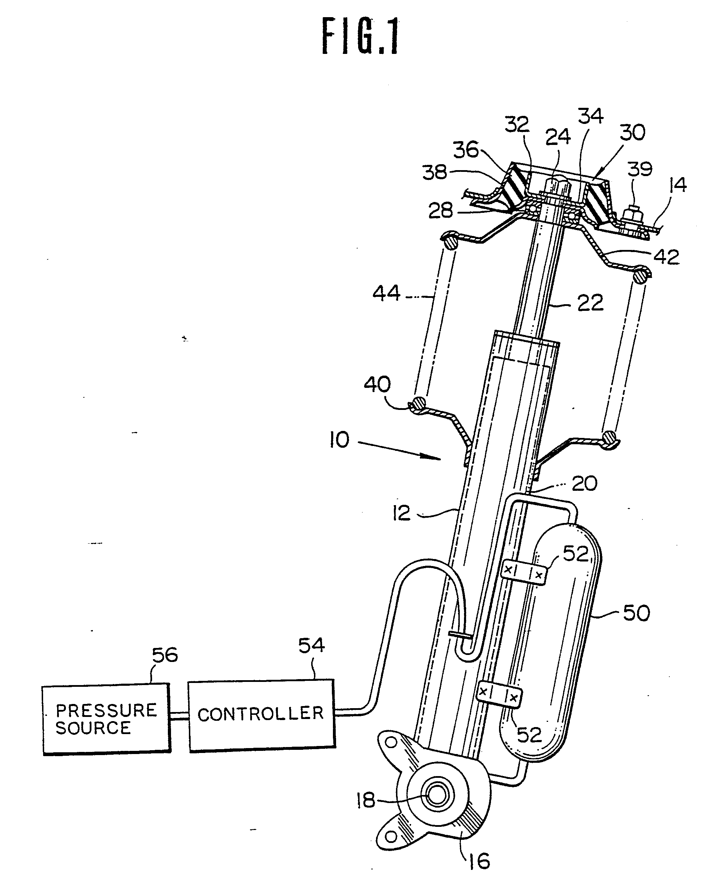

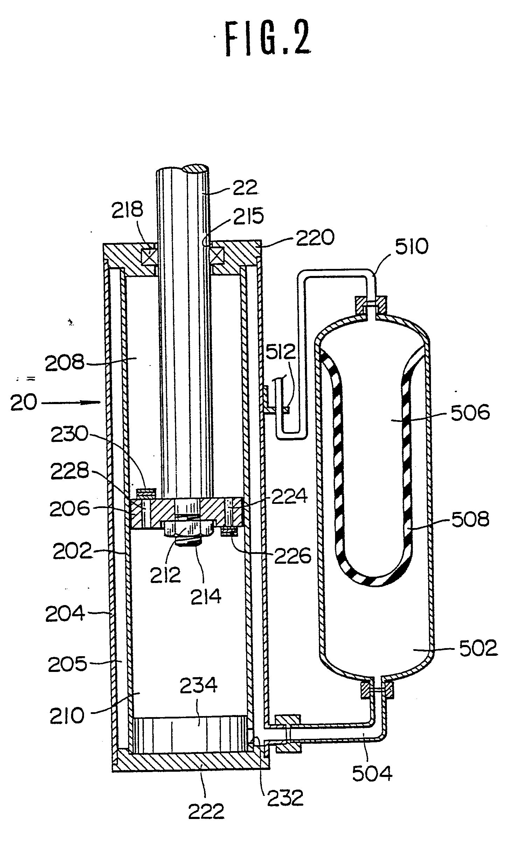

Figs. 1 and 2 show a strut type suspension to which the preferred embodiment of a vehicle level regulator is associated. The strut-type suspension has a strut assembly 10 including a cylindrical strut 12. A hydraulic shock absorber 20 is enclosed within the strut 12. The shock absorber 20 is fixed to the internal surface of the strut 12 and has a piston rod 22 extending upwardly through the strut. The top of the piston rod 22 is secured to a strut house 14 of a vehicle body via an insulator assembly 30. On the other hand, a knuckle 16 with a spindle 18 is secured to the lower end of the strut. The knuckle-and-spindle assembly is adapted to support a wheel hub and brake rotor (not shown). Thus, the strut assembly 10 is interposed between the vehicle body and the vehicle wheel.

A lower spring seat 40 is rigidly secured to the outer surface of the strut 12. An upper spring seat 42 is engaged to the upper end of the piston rod 22 and secured thereto by a fastener nut 24 engagable to a threaded portion 26 of the piston rod 22. A suspension coil spring 44 is seated between the upper and lower spring seats 40 and 42 to provide resilient damping force against relative displacements between the piston rod 22 and the strut 12.

The insulator assembly 30 comprises an inner cylindrical member 32 with an inwardly extending flange 34, a rubber bushing 36 and an outer cylindrical member 38. The outer cylindrical member 38 is rigidly secured to the strut house 14 of the vehicle body by a fastener bolt 39. On the other hand, the inner cylindrical member 32 is rigidly secured to the upper end of the piston rod 22 with the upper spring seat 42 by means of the fastener nut 24. A thrust bearing 28 is interposed between the upper spring seat 42 and the flange 34 of the inner cylindrical member 32.

A vehicle regulator of the preferred embodiment has a regulator housing 50 rigidly secured onto the outer surface of the strut 12 by means of brackets 52. The regulator housing 50 is connected to a controller 54 which is, in turn, connected to a pneumatic pressure source 56. The controller 54 is adapted to adjust the pneumatic pressure in the regulator housing 50 in order to adjust the relative distance between the vehicle body and the vehicle wheel. The controller 54 is therefore associated with detectors adapted to detect a vehicle level, vehicle speed, rolling-pitching condition and so forth. In practice, a vehicle level detector is used to input control parameters to the controller 54. The vehicle level detector is generally adapted to detect the relative displacement between the vehicle body and the vehicle wheel or between the vehicle body and the road surface.

Such vehicle level detectors for detecting relative displacement between the vehicle body and the vehicle wheel have been disclosed in United States Patent 4,290,044 to Ishikawa et al, and in the Published West German Patent Application 3,130,173, for example. On the other hand, a vehicle level detector for detecting the displacement of the vehicle body relative to the road surface has been disclosed in United States Patent Application No. 476,519 and in co-pending European Patent Application No. 83102902.0 for example. The disclosure of the above publications disclosing vehicle level detectors are hereby incorporated by reference for disclosure purposes.

On the other hand, a controller circuit including a pneumatic pressure control has been disclosed in United States Patents 4,349,077 to Sekiguchi et al and 4,327,936 to Sekiguchi. Although the controller may be constructed in various ways adapted to a specific vehicle level regulating operation, the disclosure of U.S. Patents 4,349,077 and 4,327,936 are hereby incorporated by reference for disclosure purposes.

The detailed structure of the vehicle level regulator in accordance with the preferred embodiment of the present invention will be described with reference particularly to Fig. 2. In the shown embodiment, the shock absorber 20 of double-cylinder or twin-tube type has been used. However, it should be appreciated that the present invention is applicable not only for the given double-cylinder type shock absorber but also for single-cylinder shock absorbers.

In the shown embodiment, inner and outer shock absorber cylinders 202 and 204 are co-axially arranged to define an annular chamber 205 therebetween. A piston 206 is reciprocally disposed within the inner cylinder 202 to define upper and lower fluid chambers 208 and 210 therein. The piston 206 is rigidly secured to the lower end of the piston rod 22 by mean of a fastener nut 212 engagable with a threaded portion 214 of the piston rod which extends upwardly through an opening 215 fitted with a sealing ring 218 formed in a top fitting 220 commonly attached to the tops of the inner and outer shock absorber cylinders. Likewise, a bottom fitting 222 is attached to the bottom of the inner and outer shock absorber cylinders in common.

The piston 206 is formed with one or more first

passages 224 with first check valves 226 for fluid flowing from the upper fluid chamber 208 to the lower fluid chamber 210. The piston also formed with one or more second passages 228 with second check valves 230 for fluid flowing from the lower fluid chamber 210 to the upper fluid chamber 208. The first and second passages 224 and 228 have sufficiently small cross-section to provide resistance to fluid flow by way of orifice effect in order to produce a damping force against vertical forces resulting in relative displacement between the vehicle body and the vehicle wheel. Therefore, the first passages with the first check valves are effective in the piston expansion stroke the second passage with the second check valves are effective in the piston compression stroke.

The annular chamber 205 is in communication with the lower fluid chamber 210 via a communication passage 232 formed in the inner cylinder 202 and via a valve member 234. The annular chamber 205 is, in turn, in communication with a fluid pressure accumulating chamber 502 defined in the regulator housing 50 via a tube 504. The fluid pressure accumulating chamber 502 is separated from a pneumatic pressure chamber 506, which is also defined in the regulator housing 50, by means of an elastically deformable diaphragm 508. The pneumatic pressure chamber 506 is connected to the foregoing controller 54 via a pneumatic pressure passage 510 to receive a vehicle level regulating pressure. According to the pneumatic presure supplied from the controller 54, the volume of the pneumatic pressure chamber 506 varies, resulting in corresponding changes in the volume of the pressure accumulating chamber 502. In the preferred embodiment, the pneumatic pressure passage 510 may be defined by a rigid tube which is fixed to the strut by mean of a fitting bracket 512.

In the shown embodiment, the bottom valve member 234 may constructed the same as the piston, i.e., in the form of an orifice-and-valve arrangement. Of course, this valve member may be designed in any appropriate way. It should also be noted that the level regulator constituted by the pressure accumulator chamber and the pneumatic pressure chamber in combination acts as a converter converting pneumatic pressure into the hydraulic or fluid pressure required by the hydraulic shock absorber. Furthermore, it should be appreciated that a separate regulator housing for converting the pneumatic pressure into the fluid pressure may not always be necessary. For example, when the shock absorber per se is provided with a gas or pneumatic chamber as illustrated in the Published British Patent Application 2044882, the pneumatic or gas chamber in the shock absorber may be connected directly to the controller.

The operation of the vehicle level regulator according to the preferred embodiment of the present invention will be described below.

- 10 -

0114680

When a load such as the weight of a vehicle occupant or luggage is applied to the vehicle body, the vehicle body is necessarily lowered relative to the road surface or the vehicle wheel. This downward displacement of the vehicle body is detected by the vehicle level detector. The vehicle level detector thus produces a signal indicative of the lowered condition of the vehicle body. The controller 54 is responsive to the signal from the vehicle level detector for supplying the increased pneumatic pressure to the pneumatic pressure chamber 506 in the regulator housing 50. Due to this increased pneumatic pressure, the pneumatic pressure chamber 506 expands to reduce the volume of the pressure accumulating chamber 502. The fluid accumulated in the pressure accumulating chamber 502 is thus driven out to the shock absorber via the tube 504. This fluid is fed into the lower fluid chamber 210 via the communication passage 232 and the valve member 234. As a result, the fluid pressure in the lower fluid chamber 210 increass, driving the piston upwards. Accordingly, the piston rod 22 moves upwards to raise the vehicle body by a corresponding magnitude.

During this upward piston movement, due to the in fluid pressure difference between the upper and lower fluid chambers 208 and 210, the fluid in the upper fluid chamber 208 flows towards the lower fluid chamber 210 via the first passage 224 and the first check valve 226 at a restricted rate for allowing upward movement of the piston. The controller 54 continues the foregoing operation until the vehicle level returns to the initial un-loaded position or within a predetermined vehicle level range, and the fluid pressures in the upper and lower fluid chambers 208 and 210 balance at the piston position corresponding to the compensated vehicle body level, which may correspond to the initial position of the piston under no load conditions or within a predetermined vehicle level range.

Alternatively, when the load on the vehicle is reduced by removing a passenger or some luggage, the pressure balance in the shock absorber is disturbed, resulting in upward movement of the piston and the vehicle body. This upward movement of the vehicle body beyond a predetermined upper level is detected by the vehicle level detector. In this case, the vehicle level detector produces a signal indicative of the raised condition of the vehicle body. The controller 54 is responsive to this signal from the vehicle level detector to operate a pressure control valve to reduce the pneumatic pressure in the pneumatic pressure chamber 506. Due to this reduction in pneumatic pressure, the pneumatic pressure chamber 506 contracts to increase the volume of the pressure accumulating chamber 502. The resulting fluid pressure difference between the pressure accumulating chamber 502 and the lower fluid chamber 210 causes fluid flow from the lower fluid chamber 210 to the pressure accumulating chamber 502. In response to this reduction in the fluid

0114680

pressure in the lower fluid chamber, the piston moves downwarads due to the higher fluid pressure in the upper fluid chamber 208. In accordance with the downward movement of the piston, the vehicle level is lowered to the initial level.

The downward movement of the piston stop when the fluid pressures in the upper and lower fluid chambers balance and, in turn, the fluid pressures in the lower fluid chamber and the pressure accumulator chamber balance.

In an alternation, it would be possible to provide the vehicle level detector which produces up signal and down signal when the vehicle body in displaced related to road surface or vehicle wheel across lower and upper threshold level. In this case, the pneumatic pressure to be supplied to the pneumatic pressure chamber would be adjusted in order to maintain the vehicle body level relative to the road surface or vehicle wheel within normal level range defined by the lower and upper threshold level.

With the foregoing vehicle level regulating operation, the vehicle body is maintained at a constant level regardless of its load conditions. This prevents camber change, toe-in change and so forth in suspension geometry to ensure good driving stability. Furthermore, by maintaining the vehicle at a constant attitude, the beam axis of the headlights will remain properly oriented to ensure good lighting performance in night driving.

In addition, according to the present invention, since the vehicle level regulator allows reduction of the height of the strut assembly, a shorter strut assembly can be used. As a result, the vertical dimensions required for installing the strut assembly in the vehicle suspension can be reduced. This advantageously allows the elevation of a front fender and thereby the engine hood to be reduced in the case of front suspension.

It should be appreciated the vehicle level regulator according to the present invention can regulate separate suspension strut assemblies provided for each of the vehicle wheels. In this case, roll-pitch condition or canted vehicle attitude may be detected by another detector which also associated with the controller. Furthermore, by use of the inventive vehicle level regulator, the damping force of the shock absorber can be adjusted in accordance with vehicle speed or the like. In this case, a vehicle speed detector or speed sensor may be additionally associated with the controller.

## CLAIMS

0114680

1. An automotive vehicle suspension with a vehicle level regulator comprising:

a suspension assembly including a shock absorber disposed between a vehicle body and a vehicle wheel, said shock absorber having a piston reciprocally disposed within a shock absorber cylinder to define therein first and second fluid chambers communicating viscously with each other via said piston, which first and second fluid chambers are filled with a working fluid; c h a r a c t e r i z e d by

a pressure control means (50), associated with said shock absorber (20), for adjusting the pressure of said working fluid first and second chambers (208,210) by way of converting pneumatic pressure into fluid pressure; and

a pneumatic pressure supply (54,56) responsive to displacement between said vehicle body and said vehicle wheel beyond a predetermined value to supply a pneumatic pressure to said pressure control means sufficient to maintain the relative distance between said vehicle body and said vehicle wheel within a given range.

2. The vehicle suspension as set forth in claim 1, c h a - r a c t e r i z e d in that said pressure control means comprises a variable volume pneumatic chamber (506) connected to said pneumatic pressure supply (54,56), the volume of which varies in accordance with the supplied pneumatic pressure, and a fluid accumulating chamber (502) communicating with one of said first and second fluid chambers (208,210) of said shock absorber (20) and associated with said pneumatic chamber such that the volume thereof varies in accordance with the variation of the volume of said pneumatic chamber.

3. The vehicle suspension as set forth in claim 2, c h a - r a c t e r i z e d in that said pneumatic chamber (506) and said fluid accumulating chamber (502) are partitioned by an elastically deformable member which controls the relative volumes thereof depending upon the pneumatic pressure supplied to said pneumatic chamber.

4. The vehicle suspension as set forth in claim 3, c h a - r a c t e r i z e d in that said pneumatic chamber (506) and said fluid accumulating chamber (502) are defined within a rigid housing (50).

5. The vehicle suspension as set forth in claim 4, c h a - r a c t e r i z e d in that said housing (50) is attached to said suspension assembly.

6. The vehicle suspension as set forth in claim 4, c h a - r a c t e r i z e d in that said suspension assembly comprises a suspension strut assembly including a hollow cylindrical strut (10) enclosing therein said shock absorber (20), and said housing (50) is attached to said strut by means of a bracket (52).

- 16 -

0114680

7. The vehicle suspension as set forth in claim 1, c h a - r a c t e r i z e d in that said pneumatic pressure supply comprises a pneumatic generator (56), a pressure control valve (54) interposed between said pneumatic pressure generator and said pneumatic chamber (506), and a vehicle level detector responsive to the displacement betwen said vehicle body and said vehicle wheel to control the operation of said pressure control valve.

8. The vehicle suspension as set forth in claim 1, c h a - r a c t e r i z e d in that said pneumatic pressure supply (54,56) is mounted on said vehicle body.

9. The vehicle suspension as set forth in claim 6, c h a - r a c t e r i z e d in that said pneumatic pressure supply comprises a pneumatic pressure generator (56), a pressure control valve (54) interposed between said pneumatic pressure generator and said pneumatic chamber (506) for adjusting the supply of the pneumatic pressure, and a vehicle level detector responsive to the displacement between said vehicle body and said vehicle wheel to control the operation of said pressure control valve.

10. The vehicle suspension as set forth in claim 9, c h a - r a c t e r i z e d in that said pneumatic pressure supply is mounted on said vehicle body.

11. An automotive vehicle suspension with a vehicle level

0114680

regulator comprising c h a r a c t e r i z e d in that

a hydraulic actuator (20) responsive to an externally supplied hydraulic pressure to control the spacing between the body and a wheel of the vehicle;

a pneumatic controller (54,56) responsive to changes in the spacing between the body and a wheel of the vehicle to produce a pneumatic control pressure related to the displacement required to return said spacing to a desired range; and

a converter (50,502,506) connected for pneumatic communication with the controller and for hydraulic communication with the actuator and responsive to the pneumatic control pressure to supply a corresponding hydraulic control pressure to the actuator.

1/2

# FIG.1

# FIG.2